# EUROPEAN PATENT SPECIFICATION

(11) **EP 2 149 479 B1**
(45) Date of publication and mention of the grant of the patent: **01.02.2012**
(21) Application number: 09166291.6
(22) Date of filing: 24.07.2009
(51) Int. Cl.: B60R 21/02, B60R 13/02, F16B 21/16, F16B 35/04, F16B 35/06

(54) **Vehicle partition**
Fahrzeugtrennung
Partition de véhicule

(30) Priority: 31.07.2008 GB 0814010
(43) Date of publication of application: 03.02.2010
(73) Proprietor: Nissan Motor Manufacturing (UK) Ltd., Cranfield Bedfordshire MK43 0DB (GB)
(72) Inventor: Swanepoel, Gary, Cranfield, Bedfordshire MK43 0DB (GB)

(56) References cited:
- DE-A1- 10 023 403
- DE-A1- 10 222 050
- DE-C1- 19 730 802
- FR-A1- 2 379 407
- FR-A1- 2 395 864
- GB-A- 2 277 060

## Description

The present invention relates to passenger vehicle cargo partitions and in particular a dog guard for a passenger vehicle.

Modern passenger vehicles and in particular larger hatchbacks and estate cars are frequently used to transport dogs. It is common to use the luggage compartment of such vehicles to house the dog for several reasons. Firstly, there is sufficient space to allow the animal to be comfortable during transportation, and secondly a retaining partition can be provided between the luggage compartment and the passenger compartment. This partition is important as it prevents the dog from entering the passenger compartment in the course of normal driving and also acts as a barrier in the event of an accident to prevent the dog being thrown forward into the passenger compartment.

Additionally such partitions are often used to provide safe accommodation in the luggage compartment for other heavy or large cargo to prevent them entering the passenger compartment.

It is known to provide a vehicle with a partition or dog guard which is integral with the vehicle, that is to say part of the factory build. Such designs usually either rotate upwardly from the luggage compartment about pivots located proximate the top of the rear seats or unfurl from a rolled stowed position, again near the top of the rear seat, to clip into the vehicle headlining. However, such designs have the disadvantage that integral partitions take up unwanted space for those vehicle owners who do not need or want to use the partition. Furthermore, the additional fittings required for such a device can be unsightly, a problem which is compounded by the fact that the fittings will often be redundant.

Examples of vehicle partitions designed by vehicle manufacturers are known from DE 102 22 050 A1 and DE 100 23 403 A1. These prior art patents both disclose use of a spring loaded catch (parts 43 and 9 respectively) to engage with a mounting on a vehicle body to retain a vehicle partition in an installed position.

Alternatively, an aftermarket dog guard or partition can be fitted which does not require any bespoke fittings in the vehicle design. Such a design of dog guard is usually fixed in place by means of supports which are pressed against the luggage compartment floor and vehicle headlining. However these designs have the disadvantage that they are often relatively difficult to adequately fix and can therefore come loose during everyday use, or in the event of an accident. Aftermarket vehicle partitions, an example of which is disclosed in GB 2 277 060, are typically held in place by friction.

It is an object of the present invention to at least mitigate some of the above problems.

According to one aspect of the invention there is provided a partition mounting system for a vehicle partition, said system comprising a partition mounting and a partition mounting pin, where said partition mounting comprises an aperture adapted to receive said partition mounting pin, and said aperture is covered by a vehicle trim before insertion of the partition mounting pin into the partition mounting, characterized in that said vehicle trim comprises a locally weakened area adapted to allow the partition mounting pin to rupture the vehicle trim on insertion of said mounting pin into said aperture.

Advantageously, this invention provides for the partition mounting points (in the form of a number of such partition mountings) to remain hidden until, and only if, they are required by the owner of the vehicle. In the event that the vehicle owner does not have a requirement to make use of the partition, the partition fittings remain invisible to the owner thereby not detracting from the aesthetics of the vehicle trim. In the event that the owner does wish to make use of the partition, the vehicle trim is penetrated by the locking pin at the appropriate position to engage the mounting which is located just beneath the vehicle trim.

Preferably, the partition mounting pin comprises a head comprising a chamfered end.

Advantageously this promotes a clean break in the vehicle trim when said trim is ruptured.

Preferably, the vehicle trim has a mark indicating the location of the mounting.

Advantageously this allows the mounting pin to be easily located in the mounting.

Preferably, the mounting pin has an abutment for abutting the mounting.

More preferably the mounting pin can be extended from the partition by rotation of a threaded nut on a threaded portion of the mounting pin.

Advantageously this allows the partition to be fixed rigidly in position by biasing the abutments against the mounting.

Preferably, the mounting pin has an annular depression behind the head for engaging the partition mounting in the event of the partition being loaded or impacted.

Advantageously, this feature prevents the locking pin from coming free of the mounting in the event that the partition experiences a substantial load which causes the locking pin to be urged from the mountings following a vehicle accident or a collision. This feature allows the locking pin to be easily inserted into the mounting but prevents the pin from being removed therefrom in an uncontrolled manner.

According to a further aspect of the invention there is provided a method of attaching a vehicle partition to a vehicle body, the method including the steps of: providing a partition mounting pin on the vehicle partition and a partition mounting on the vehicle body; providing a vehicle trim to cover an aperture in the partition mounting;
positioning the partition mounting pin adjacent the partition mounting; and rupturing the trim with the partition mounting pin so as to engage the partition mounting with the partition mounting pin.

The invention will now be described by way of example only and with reference to the following drawings in which:
Figure 1 is a schematic plan view of a vehicle having a partition having the mounting of the current invention;
Figure 2 is a schematic end view of a vehicle having the partition of Figure 1;
Figure 3 is a section view of a vehicle roof lining mounting of the partition of Figure 1;
Figure 4 is a section view of a vehicle side wall mounting of the partition of Figure 1;
Figure 5 is a detailed section view of the mounting of Figure 3 showing the mounting pin in its engaged position;
Figure 6 is a detailed section view of the mounting pin of Figure 5 showing the mounting pin in its emergency retracted position.

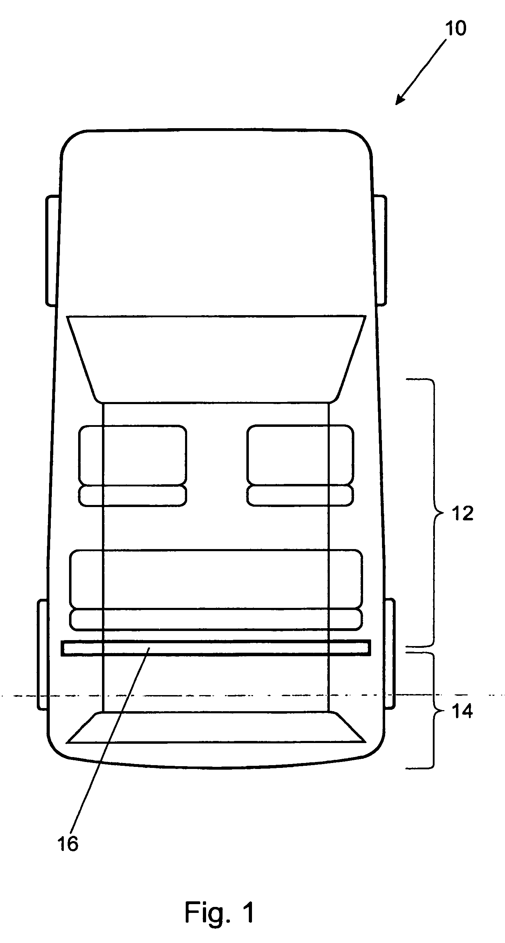

In Figure 1, a vehicle 10 is shown having a passenger compartment 12 and a luggage compartment 14. Situated between the luggage compartment 14 and the passenger compartment 12 is a partition 16.

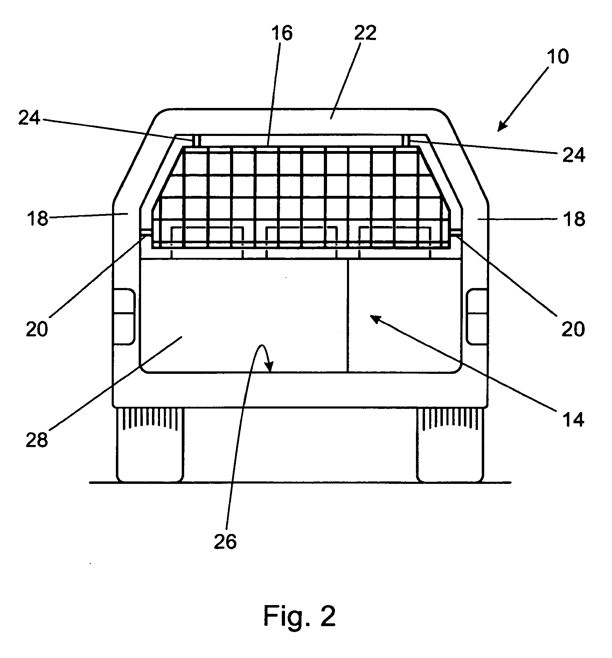

Turning to Figure 2, the partition 16 is fixed to the vehicle walls 18 by wall mounting points 20 and to the vehicle roof 22 by roof mounting points 24. It will be appreciated that the roof mounting points 24 are vertically orientated whilst the wall mounting points 20 are horizontally orientated. It will also be appreciated that the specific position of the wall and roof mounting points 20, 24 could be varied without departure from the scope of the invention. For example, the partition 16 could extend down to the luggage compartment floor 26 and be provided with floor mounting points.

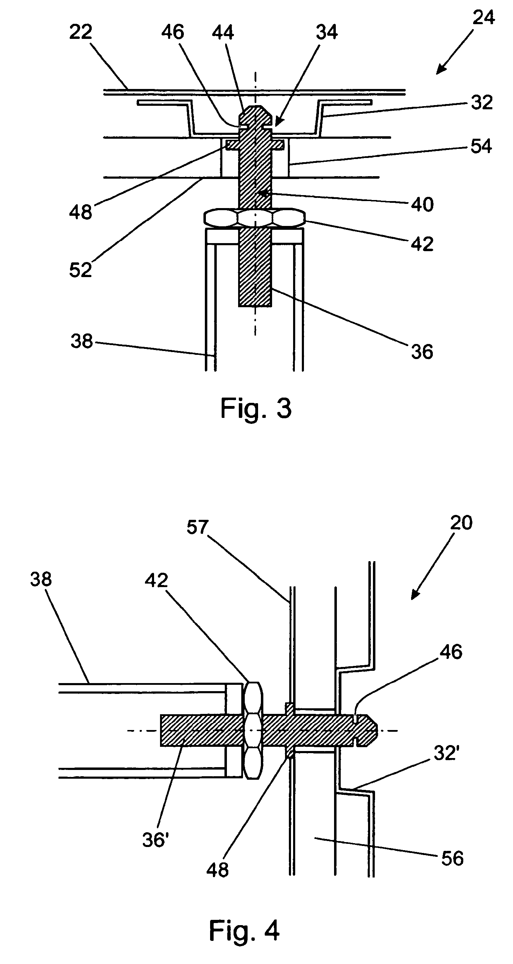

Turning to Figure 3 which shows the roof mounting point 24 in greater detail, the vehicle roof 22 has an inwardly extending portion which forms a roof bow which locally reinforces the vehicle roof and provides a suitable mounting 32 for the partition 16. The mounting 32 is provided with a mounting aperture 34 for receiving a mounting pin 36. The mounting pin 36 is attached to the partition 16 (not shown in Figure 3 for clarity) via a tube 38. The mounting pin 36 has a threaded section indicated generally at 40 on which is carried a locking nut 42 the purpose of which will be described in further detail shortly. As can be seen, the locking nut 42 abuts an end of the tube 38.

At the opposite end of the mounting pin 36 to the tube 38 is a projecting head 44 which extends through the aperture 34. The projecting head 44 has an annular depression 46 the purpose of which will be described in further detail shortly. On the opposite side of the aperture 34 to the annular depression 46 is an annular abutment 48 which in use rests against an internal surface 50 of the mounting 32. Arranged on the inboard side of the mounting 32 is a headlining trim 52. The headlining trim has a hole therethrough formed by the mounting pin 36 having been pushed through the headlining trim 52 in order to access the mounting 32 as will be described in further detail shortly.

Prior to insertion of the mounting pin 36 into the mounting 32, the headlining trim 52 entirely covers the mounting 32. A locally weakened area may be provided in the headlining trim 52 so as to allow the mounting pin 36 to more readily rupture the trim, thereby forming a hole 54 so as to access the mounting 32. It will be appreciated that the projecting head 44 has a chamfered end so as to promote a clean break in the trim.

Turning now to Figure 4, the vehicle wall mounting point 20 is shown to be similar to the roof mounting point 24 of Figure 3 and accordingly components in common with the roof mounting point are similarly numbered.

In distinction from the roof mounting point 24, the wall mounting point 20 has a different mounting pin 36' which has a greater distance between the annular abutment 48 and the annular depression 46 so as to accommodate the luggage compartment trim piece 56 which is covered by luggage trim cover 57. The luggage compartment trim piece 56 rests against a vehicle inner body panel mounting 32'. In all other regards, the wall mounting point 20 is identical to the roof mounting point 24 described above.

In order to fit the partition 16, the locking nuts 42 are rotated so that the mounting pin 36, 36' are in their fully retracted positions. Each of the wall mounting points 20 and roof mounting points 24 are then aligned with their respective mountings 32, 32' in the body side inner 58 and roof 22 respectively. The mounting pins 36, 36' can be easily located at their respective mounting points by a discrete mark in the roof lining or luggage compartment trim pieces (these marks are not shown for clarity) or by the markings provided by the optional areas of pre-weakening. With the mounting pins in the correct position, the locking nuts 42 are rotated so as to extend the projecting head 44 of the mounting pins 36, 36' which in turn causes the pins to penetrate respectively the luggage compartment trim pieces 56 and roof lining, thereby providing access for the annular abutments to the inner surface 50 of the mountings 32, 32'. Further rotation of the locking nuts 42 causes the annular abutments 48 to be resiliently loaded against the mountings 32, 32' which fix the partition 16 firmly in place.

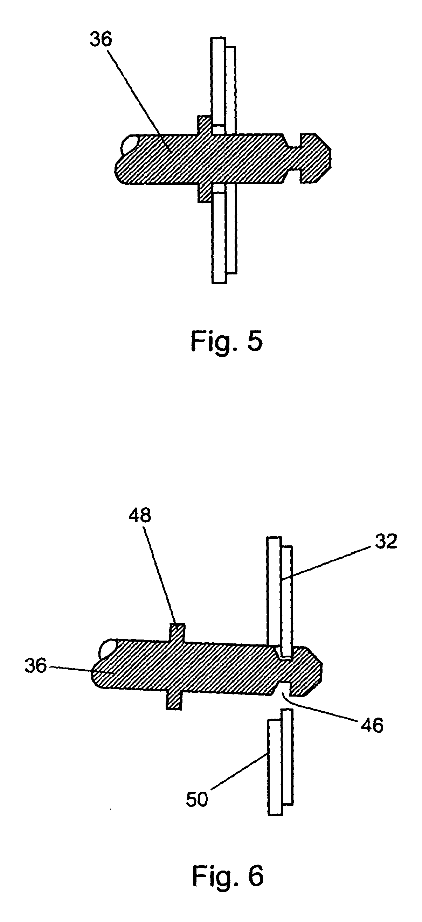

In the event of a vehicle collision or other event causing a sudden loading of the partition 16, mounting pin 36, 36' may be moved from a rest engaged position as shown in Figure 5 in which the partition 16 is resiliently held in place as described above, to an emergency position as shown in Figure 6. In this position, a large load applied to the partition 16 has caused the abutment 48 to withdraw from the internal surface 50 of the mounting 32. However, rather than the entire mounting pin 36 being withdrawn or extracted from the mounting 32, the annular depression 46 has engaged with the mounting 32 so as to prevent complete retraction of the mounting pin 36 from the mounting. In this way, even in the event of a load on the partition 16, the partition will not be entirely withdrawn from the mountings 32, 32' and will therefore remain in position so as to safely retain the contents of the luggage compartment 14.

Additionally, each of the mountings has the same design. Likewise each of the mounting pins are similarly configured, subject to the distance between the annular depression and the abutment varying depending on the depth of trim.

It can also be envisaged within the scope of the invention that only one of an opposing pair of mounting pins 36, 36' would be threaded, i.e. one could be of fixed geometry with the opposing pin providing the means to extend the projecting head 44. Alternatively, the tubes 38 are threaded and may be turned by the user to extend or retract the mounting pins 36, 36' relative to the partition 16.

In the event that the owner of the vehicle 10 wishes to remove the partition 16 from the vehicle, the locking nuts 42 are simply unscrewed so as to release the mounting pins 36 from the roof bow 32, 32' and plastic plugs or caps are then inserted into the aperture so as to conceal the hole 54 in the headlining or luggage compartment trim pieces 56. As each mounting pin 36, 36' is similarly configured, the plastic plugs or caps can all be the same size.

It will be appreciated that whilst the above description is an example of a partition of the present invention which separates a passenger compartment from a luggage compartment, the partition could equally well divide the luggage compartment of a passenger car, or the cargo area of a commercial vehicle without departure from the scope of the invention.

## Claims

1. A partition mounting system for a vehicle partition (16), said system comprising a partition mounting (32, 32') and a partition mounting pin (36, 36');
where said partition mounting (32, 32') comprises an aperture (34) adapted to receive said partition mounting pin (36, 36'), and said aperture (34) is covered by a vehicle trim (52, 56) before insertion of the partition mounting pin (36, 36') into the partition mounting (32, 32');
**characterized in that** said vehicle trim (52, 56) comprises a locally weakened area adapted to allow the partition mounting pin (36, 36') to rupture the vehicle trim (52, 56) on insertion of said mounting pin (36, 36') into said aperture (34).

2. A partition mounting system according to claim 1, wherein the partition mounting pin (36, 36') comprises a head (44) comprising a chamfered end so as to promote a clean break in the vehicle trim (52, 56) when said trim is ruptured.

3. A partition mounting system according to claim 2, wherein the partition mounting pin (36, 36') has an annular depression (46) behind the head (44) for engaging the partition mounting (32, 32') in the event of the partition being loaded or impacted.

4. A partition mounting system according to any preceding claim wherein the partition mounting pin (36, 36') comprises an annular abutment (48) arranged to abut an inner surface (50) of the partition mounting (32, 32').

5. A partition mounting system according to any preceding claim wherein the vehicle trim (52, 56) has a mark indicating the location of the partition mounting (32, 32').

6. A partition mounting system according to any preceding claim wherein the vehicle trim (52) is a headlining trim.

7. A partition mounting system according to any of claims 1 to 5 wherein the vehicle trim (56) is a luggage compartment trim piece.

8. A partition mounting system according to any preceding claim wherein the vehicle partition (16) is situated in use between a luggage compartment (14) and a passenger compartment (12) of a vehicle.

9. A partition mounting system according to any preceding claim wherein the vehicle partition (16) is provided with wall mounting points (20) and roof mounting points (24).

10. A partition mounting system according to claim 9 wherein the wall mounting points (20) are horizontally oriented and the roof mounting points (24) are vertically oriented.

11. A partition mounting system according to any preceding claim wherein the vehicle partition (16) extends down to a luggage compartment floor (26) and is provided with floor mounting points.

12. A partition mounting system according to any preceding claim wherein the partition mounting pin (36, 36') can be extended from the vehicle partition (16) by rotation of a threaded nut (42) on a threaded portion (40) of the mounting pin (36, 36').

13. A partition mounting system according to any preceding claim comprising plugs or caps which can be used to plug the partition mounting apertures (34) when the partition mounting pins (36, 36') are removed from said apertures after use of the vehicle partition (16).

14. A method of attaching a vehicle partition (16) to a body of a vehicle (10), the method including the steps of:
providing a partition mounting pin (36, 36') on the vehicle partition (16) and a partition mounting (32, 32') on the vehicle body;
providing a vehicle trim (52, 56) to cover an aperture (34) in the partition mounting (32, 32');
positioning the partition mounting pin (36, 36') adjacent the partition mounting (32, 32');
and rupturing the trim (52, 56) with the partition mounting pin (36, 36') so as to engage the partition mounting (32, 32') with the partition mounting pin (36, 36').

## Patentansprüche

1. Trennvorrichtungs-Montagesystem für eine Fahrzeug-Trennvorrichtung (16), wobei das genannte System eine Trennvorrichtungs-Halterung (32, 32') und einen Trennvorrichtungs-Montagestift (36, 36') umfasst;
wobei die genannte Trennvorrichtungs-Halterung (32, 32') eine Öffnung (34) umfasst, die dazu angepasst ist, den genannten Trennvorrichtungs-Montagestift (36, 36') aufzunehmen, und die genannte Öffnung (34) vor dem Einstecken des Trennvorrichtungs-Montagestifts (36, 36') in die Trennvorrichtungs-Halterung (32, 32') von einer Fahrzeug-Innenverkleidung (52, 56) verdeckt ist;
**dadurch gekennzeichnet, dass** die genannte Fahrzeug-Innenverkleidung (52, 56) einen örtlich geschwächten Bereich umfasst, der dazu angepasst ist, zuzulassen, dass der Trennvorrichtungs-Montagestift (36, 36') die Fahrzeug-Innenverkleidung (52, 56) beim Einstecken des genannten Montagestifts (36, 36') in die genannte Öffnung (34) durchbricht.

2. Trennvorrichtungs-Montagesystem nach Anspruch 1, wobei der Trennvorrichtungs-Montagestift (36, 36') einen Kopf (44) umfasst, der ein abgeschrägtes Ende umfasst, um einen sauberen Bruch in der Fahrzeug-Innenverkleidung (52, 56) zu begünstigen, wenn die genannte Innenverkleidung durchbrochen wird.

3. Trennvorrichtungs-Montagesystem nach Anspruch 2, wobei der Trennvorrichtungs-Montagestift (36, 36') eine ringförmige Vertiefung (46) hinter dem Kopf (44) aufweist, um die Trennvorrichtungs-Halterung (32, 32') zu greifen, falls die Trennvorrichtung belastet oder gestoßen wird.

4. Trennvorrichtungs-Montagesystem nach einem der vorangehenden Ansprüche, wobei der Trennvorrichtungs-Montagestift (36, 36') ein ringförmige Abstützung (48) umfasst, die dazu angeordnet ist, an einer inneren Oberfläche (50) der Trennvorrichtungs-Halterung (32, 32') anzuliegen.

5. Trennvorrichtungs-Montagesystem nach einem der vorangehenden Ansprüche, wobei die Fahrzeug-Innenverkleidung (52, 56) eine Markierung aufweist, die die Lage der Trennvorrichtungs-Halterung (32, 32') angibt.

6. Trennvorrichtungs-Montagesystem nach einem der vorangehenden Ansprüche, wobei es sich bei der Fahrzeug-Innenverkleidung (52) um eine Deckenverkleidung handelt.

7. Trennvorrichtungs-Montagesystem nach einem der Ansprüche 1 bis 5, wobei es sich bei der Fahrzeug-Innenverkleidung (56) um ein Gepäckraum-Verkleidungsstück handelt.

8. Trennvorrichtungs-Montagesystem nach einem der vorangehenden Ansprüche, wobei sich die Fahrzeug-Trennvorrichtung (16) in Gebrauch zwischen einem Gepäckraum (14) und einem Fahrgastraum (12) eines Fahrzeugs befindet.

9. Trennvorrichtungs-Montagesystem nach einem der vorangehenden Ansprüche, wobei die Fahrzeug-Trennvorrichtung (16) mit Wandmontagepunkten (20) und Dachmontagepunkten (24) versehen ist.

10. Trennvorrichtungs-Montagesystem nach Anspruch 9, wobei die Wandmontagepunkte (20) horizontal orientiert sind und die Dachmontagepunkte (24) vertikal orientiert sind.

11. Trennvorrichtungs-Montagesystem nach einem der vorangehenden Ansprüche, wobei sich die Fahrzeug-Trennvorrichtung (16) bis zu einem Gepäckraumboden (26) nach unten erstreckt und mit Bodenmontagepunkten versehen ist.

12. Trennvorrichtungs-Montagesystem nach einem der vorangehenden Ansprüche, wobei der Trennvorrichtungs-Montagestift (36, 36') durch Drehung einer Gewindemutter (42) auf einem Gewindeabschnitt (40) des Montagestifts (36, 36') von der Fahrzeug-Trennvorrichtung ausgefahren werden kann.

13. Trennvorrichtungs-Montagesystem nach einem der vorangehenden Ansprüche, umfassend Stopfen oder Kappen, die dazu verwendet werden können, die Trennvorrichtungs-Montageöffnungen (34) zu verstopfen, wenn die Trennvorrichtungs-Montagestifte (36, 36') nach dem Gebrauch der Fahrzeug-Trennvorrichtung (16) aus den genannten Öffnungen entfernt werden.

14. Verfahren zum Befestigen einer Fahrzeug-Trennvorrichtung (16) an einer Karosserie eines Fahrzeugs (10), wobei das Verfahren folgende Schritte umfasst:
Bereitstellen eines Trennvorrichtungs-Montagestifts (36, 36') an der Fahrzeug-Trennvorrichtung (16) und einer Trennvorrichtungs-Halterung (32, 32') an der Fahrzeugkarosserie;
Bereitstellen einer Fahrzeug-Innenverkleidung (52, 56), um eine Öffnung (34) in der Trennvorrichtungs-Halterung (32, 32') zu verdecken;
Positionieren des Trennvorrichtungs-Montagestifts (36, 36') angrenzend an die Trennvorrichtungs-Halterung (32, 32'); und Durchbrechen der Innenverkleidung (52, 56) mit dem Trennvorrichtungs-Montagestift (36, 36'), um mit dem Trennvorrichtungs-Montagestift (36, 36') in der Trennvorrichtungs-Halterung (32, 32') einzugreifen.

## Revendications

1. Système de montage de cloison pour une cloison de véhicule (16), ledit système comprenant une monture de cloison (32, 32') et une broche de monture de cloison (36, 36') ;
dans lequel ladite monture de cloison (32, 32') comprend une ouverture (34) adaptée pour recevoir ladite broche de monture de cloison (36, 36'), et ladite ouverture (34) est recouverte par une garniture de véhicule (52, 56) avant l'insertion de la broche de monture de cloison (36, 36') dans la monture de cloison (32, 32') ;
**caractérisé en ce que** ladite garniture de véhicule (52, 56) comprend une zone affaiblie localement adaptée pour permettre à la broche de monture de cloison (36, 36') de percer la garniture de véhicule (52, 56) à l'insertion de ladite broche de monture (36, 36') dans ladite ouverture (34).

2. Système de montage de cloison selon la revendication 1, dans lequel la broche de monture de cloison (36, 36') comprend une tête (44) à extrémité chanfreinée pour faciliter un perçage net dans la garniture de véhicule (52, 56) quand ladite garniture est percée.

3. Système de montage de cloison selon la revendication 2, dans lequel la broche de monture de cloison (36, 36') comporte une dépression annulaire (46) derrière la tête (44) pour l'engagement de la monture de cloison (32, 32') en cas de chargement ou d'impact sur la cloison.

4. Système de montage de cloison selon l'une quelconque des revendications précédentes, dans lequel la broche de monture de cloison (36, 36') comprend une butée annulaire (48) agencée pour butter contre une surface interne (50) de la monture de cloison (32, 32').

5. Système de montage de cloison selon l'une quelconque des revendications précédentes, dans lequel la garniture de véhicule (52, 56) comporte un repère indiquant la position de la monture de cloison (32, 32').

6. Système de montage de cloison selon l'une quelconque des revendications précédentes, dans lequel la garniture de véhicule (52) est une garniture de toit.

7. Système de montage de cloison selon l'une quelconque des revendications 1 à 5, dans lequel la garniture de véhicule (56) est un morceau de garniture de coffre.

8. Système de montage de cloison selon l'une quelconque des revendications précédentes, dans lequel la cloison de véhicule (16) est située durant son utilisation entre un coffre (14) et un habitacle (12) d'un véhicule.

9. Système de montage de cloison selon l'une quelconque des revendications précédentes, dans lequel la cloison de véhicule (16) est dotée de points de montage sur paroi (20) et points de montage au plafond (24).

10. Système de montage de cloison selon la revendication 9, dans lequel les points de montage sur paroi (20) sont orientés horizontalement et les points de montage au plafond toit (24) sont orientés verticalement.

11. Système de montage de cloison selon l'une quelconque des revendications précédentes, dans lequel la cloison de véhicule (16) s'étend vers le bas jusqu'à un plancher de coffre (26) et est dotée de points de montage au plancher.

12. Système de montage de cloison selon l'une quelconque des revendications précédentes, dans lequel la broche de monture de cloison (36, 36') peut être étendue depuis la cloison de véhicule (16) par rotation d'un écrou fileté (42) sur une partie filetée (40) de la broche de monture (36, 36').

13. Système de montage de cloison selon l'une quelconque des revendications précédentes, comprenant des obturateurs ou caches servant à obturer les ouvertures de monture de cloison (34) quand les broches de monture de cloison (36, 36') sont retirées desdites ouvertures après l'utilisation de la cloison de véhicule (16).

14. Procédé d'assujettissement d'une cloison de véhicule (16) à la carrosserie d'un véhicule (10), le procédé comportant les étapes consistant à :
fournir une broche de monture de cloison (36, 36') sur la cloison de véhicule (16) et une monture de cloison (32, 32') sur la carrosserie du véhicule ;
fournir une garniture de véhicule (52, 56) pour recouvrir une ouverture (34) dans la monture de cloison (32, 32') ;
positionner la broche de monture de cloison (36, 36') à une position adjacente à la monture de cloison (32, 32') ; et percer la garniture (52, 56) avec la broche de monture de cloison (36, 36') de façon à engager la monture de cloison (32, 32') avec ladite broche de monture de cloison (36, 36').
